# EUROPÄISCHE PATENTANMELDUNG

(11) **EP 3 296 892 A1**
(43) Veröffentlichungstag der Anmeldung: **21.03.2018**
(21) Anmeldenummer: 17186361.6
(22) Anmeldetag: 16.08.2017
(51) Int. Cl.: G06F 17/30, G06F 3/0482

(54) **BENUTZERSCHNITTSTELLE FÜR DEN ZUGRIFF AUF EINE MENGE VON FUNKTIONEN, VERFAHREN UND COMPUTERLESBARES SPEICHERMEDIUM ZUM BEREITSTELLEN EINER BENUTZERSCHNITTSTELLE FÜR DEN ZUGRIFF AUF EINE MENGE VON FUNKTIONEN**

(30) Priorität: 20.09.2016 DE 102016218011
(71) Anmelder: VOLKSWAGEN AKTIENGESELLSCHAFT, 38440 Wolfsburg (DE)
(72) Erfinder: Wengelnik, Heino, 38442 Wolfsburg (DE); Mejia, Maria, Redwood City, CA 94063 (US)

(57) **Zusammenfassung**

Eine Benutzerschnittstelle (1) für den Zugriff auf eine Menge von Funktionen, ein Verfahren und ein computerlesbares Speichermedium mit Instruktionen zum Bereitstellen einer Benutzerschnittstelle (1) für den Zugriff auf eine Menge von Funktionen. Einer ersten Teilmenge der Funktionen sind Menüeinträge (3) der Benutzerschnittstelle (1) zugeordnet, über die die Funktionen aufrufbar sind. Einer zweiten Teilmenge der Funktionen sind keine Menüeinträge der Benutzerschnittstelle (1) zugeordnet. Die Funktionen sind stattdessen über eine Suchfunktion (4) der Benutzerschnittstelle (1) aufrufbar.

## Beschreibung

### Gebiet der Erfindung

Die vorliegende Erfindung betrifft eine Benutzerschnittstelle für den Zugriff auf eine Menge von Funktionen sowie ein Verfahren und ein computerlesbares Speichermedium mit Instruktionen zum Bereitstellen einer Benutzerschnittstelle für den Zugriff auf eine Menge von Funktionen. Die vorliegende Erfindung betrifft weiterhin ein Fahrerinformationssystem und ein Fahrzeug mit einer solchen Benutzerschnittstelle.

### Hintergrund der Erfindung

Heutige PC- oder CE-Geräte, wie beispielsweise Fernseher, Tablets, Handys, etc., aber auch Fahrerinformationssysteme von Fahrzeugen, bieten dem Benutzer Zugriff auf eine große Menge von Funktionen. Zu diesem Zweck stellen die Geräte typischerweise eine MMS (MMS: Mensch-Maschine-Schnittstelle) zur Verfügung, d.h. eine Benutzerschnittstelle, über die ein Benutzer des Gerätes eine gewünschte Funktion aufrufen kann. Üblicherweise werden dafür Menüstrukturen verwendet, in denen den einzelnen Funktionen Menüeinträge zugeordnet sind. Aufgrund der ständig steigenden Zahl verfügbarer Funktionen werden die Menüstrukturen allerdings zunehmend unübersichtlicher, was für den Benutzer ein Ärgernis darstellen kann. Hinzu kommt, dass der Benutzer speziell bei der Bedienung von Fahrerinformationssystemen seine Aufmerksamkeit nicht vollständig dem System widmen kann, sondern möglichst vollständig auf die Führung des Fahrzeugs richten muss. Eine Ablenkung durch die Bedienung des Fahrerinformationssystems sollte weitgehend vermieden werden.

Ein Fahrerinformationssystem ist im Wesentlichen ein Bordcomputer für ein Fahrzeug, auf dem spezifische Funktionen für den Einsatz im Fahrzeug als Softwareanwendungen implementiert sind. Mittels einer Anzeigevorrichtung, beispielsweise einer in ein Kombiinstrument integrierten Anzeige oder einem separaten Bildschirm, der in der Mittelkonsole oder auf dem Armaturenbrett angebracht ist, werden dem Fahrer oder einem Beifahrer unter anderem Informationen zum Fahrzeug, zur Fahrzeugumgebung oder zur Fahrt vermittelt. Daneben können über das Fahrerinformationssystem Verkehrsinformationen abgefragt und angezeigt werden sowie fahrzeugspezifische Funktionen aufgerufen werden, beispielsweise für die Fahrzeugnavigation oder die Änderung von Fahrzeugeinstellungen. Weiterhin werden Fahrerinformationssysteme typischerweise auch für das Infotainment genutzt, beispielsweise für die Wiedergabe von Multimediainhalten, die Telekommunikation oder den Zugriff auf Internetdienste.

Vor diesem Hintergrund beschreibt DE 10 2013 223 972 A1 ein Fahrerinformationssystem für ein Kraftfahrzeug. Das Fahrerinformationssystem weist eine zentrale Steuereinheit auf, die eine zentrale Suchkomponente enthält. Eine oder mehrere Instanzen der zentralen Suchkomponente können jederzeit durch einen Benutzer des Fahrerinformationssystems über eine Mensch-Maschine-Schnittstelle aufgerufen werden. Eine aktuell im Vordergrund laufende Applikation des Fahrerinformationssystems definiert dabei einen Kontext für eine Suche, der von der Instanz der Suchkomponente für eine kontextspezifische Suchanfrage genutzt wird. Durch die Bereitstellung des Kontextes durch die im Vordergrund laufende Applikation werden bevorzugt kontextbezogene Suchergebnisse ermittelt und angezeigt, wodurch die Relevanz der Ergebnisse für den Benutzer gesteigert wird und der Benutzer eine geringere Anzahl von Ergebnissen sichten muss.

### Zusammenfassung der Erfindung

Es ist eine Aufgabe der Erfindung, eine Benutzerschnittstelle für den Zugriff auf eine Menge von Funktionen bereitzustellen, bei der ohne Reduzierung des Funktionsumfanges eine erleichterte Bedienung erreicht wird.

Diese Aufgabe wird durch eine Benutzerschnittstelle mit den Merkmalen des Anspruchs 1, durch ein Verfahren mit den Merkmalen des Anspruchs 10, sowie durch ein computerlesbares Speichermedium mit Instruktionen gemäß Anspruch 11 gelöst. Bevorzugte Ausgestaltungen der Erfindung sind Gegenstand der abhängigen Ansprüche.

Gemäß einem ersten Aspekt der Erfindung sind bei einer Benutzerschnittstelle für den Zugriff auf eine Menge von Funktionen einer ersten Teilmenge der Funktionen Menüeinträge der Benutzerschnittstelle zugeordnet, über die die Funktionen aufrufbar sind. Einer zweiten Teilmenge der Funktionen sind keine Menüeinträge der Benutzerschnittstelle zugeordnet. Die Funktionen sind stattdessen über eine Suchfunktion der Benutzerschnittstelle aufrufbar.

Gemäß einem weiteren Aspekt der Erfindung umfasst ein Verfahren zum Bereitstellen einer Benutzerschnittstelle für den Zugriff auf eine Menge von Funktionen die Schritte:
- Zuordnen von Menüeinträgen der Benutzerschnittstelle zu einer ersten Teilmenge der Funktionen, wobei die Funktionen über die zugeordneten Menüeinträge aufrufbar sind;
- Anzeigen zumindest eines Teils der Menüeinträge auf einer Anzeigevorrichtung;
- Zugreifbarmachen einer zweiten Teilmenge der Funktionen, der keine Menüeinträge der Benutzerschnittstelle zugeordnet sind, für eine Suchfunktion der Benutzerschnittstelle; und
- Anzeigen einer Zugriffsmöglichkeit auf die Suchfunktion auf der Anzeigevorrichtung.

Gemäß einem weiteren Aspekt der Erfindung enthält ein computerlesbares Speichermedium Instruktionen, die bei Ausführung durch einen Computer den Computer zur Ausführung der folgende Schritte zum Bereitstellen einer Benutzerschnittstelle für den Zugriff auf eine Menge von Funktionen veranlassen:
- Zuordnen von Menüeinträgen der Benutzerschnittstelle zu einer ersten Teilmenge der Funktionen, wobei die Funktionen über die zugeordneten Menüeinträge aufrufbar sind;
- Anzeigen zumindest eines Teils der Menüeinträge auf einer Anzeigevorrichtung;
- Zugreifbarmachen einer zweiten Teilmenge der Funktionen, der keine Menüeinträge der Benutzerschnittstelle zugeordnet sind, für eine Suchfunktion der Benutzerschnittstelle; und
- Anzeigen einer Zugriffsmöglichkeit auf die Suchfunktion auf der Anzeigevorrichtung.

Erfindungsgemäß wird ein klassisches MMS-Konzept dahingehend abgewandelt, dass nur noch ein Teil der Funktionen direkt über Menüeinträge aufrufbar ist. Dieser Teil, der beispielsweise 10 bis 30% des Funktionsumfanges umfasst, kann klassisch über eine Menüstruktur (Menü; Homescreen; Favoritentasten, ...) erreicht und bedient werden. Typischerweise beinhaltet dieser Teil die wichtigsten und am häufigsten benötigten Funktionen. Der Rest der Funktionen ist nur noch mittels einer Suche erreichbar und bedienbar. Die MMS stellt dafür permanent oder zumindest in bestimmten Menüs ein Eingabefeld für die Suche zur Verfügung. Auf diese Weise können immer noch alle Funktionen erreicht werden. Gleichzeitig wird die Menüstruktur deutlich verschlankt und somit übersichtlicher für den Benutzer.

Gemäß einem Aspekt der Erfindung wird bei Aktivierung einer Eingabemaske der Suchfunktion eine vorläufige Ergebnisliste angezeigt. Die vorläufige Ergebnisliste umfasst dabei vorzugsweise Ergebnisse einer vorherigen Suche, kontextbezogene Einträge und/oder Einträge zu häufig angefragten Themen. Durch die Anzeige einer vorläufigen Ergebnisliste entfällt in vielen Fällen für den Benutzer die Notwendigkeit, einen Suchbegriff in das Suchfeld einzugeben, da die gewünschte Funktion bereits in der vorläufigen Ergebnisliste aufgeführt ist. Somit wird die Bedienung der MMS weiter vereinfacht.

Gemäß einem Aspekt der Erfindung bietet die Benutzerschnittstelle einem Benutzer die Möglichkeit, ein Suchergebnis als Favorit zugreifbar zu machen. Suchergebnisse können dazu beispielsweise sofort einer Favoritentaste zugeordnet werden. Auf diese Weise erstellte Favoriten können z.B. in jeder Bildschirmanzeige erscheinen, die Ergebnislisten enthält. Der Benutzer hat somit die Möglichkeit, Funktionen die ihm wichtig sind und die eigentlich nur über die Suche zugreifbar sind, zukünftig auch ohne Suche über die Favoriten zu erreichen. Auf diese Weise kann der Benutzer die MMS in einem gewissen Umfang an seine Bedürfnisse anpassen.

Gemäß einem Aspekt der Erfindung ist die Benutzerschnittstelle eingerichtet, einer über die Suchfunktion gesuchten Funktion einen Menüeintrag zuzuordnen. Alternativ oder zusätzlich zur Möglichkeit, Ergebnisse als Favorit abzulegen, kann die Benutzerschnittstelle auch eigenständig einer über die Suchfunktion gesuchten Funktion einen Menüeintrag zuordnen. Wenn der Benutzer die gesuchte Funktion beispielsweise öfter aufruft, kann er einen Direktzugriff in einem bestimmten Menü oder einer bestimmten Bildschirmanzeige erhalten. Dabei kann auf die absolute Zahl der Aufrufe oder die Zahl der Aufrufe innerhalb eines bestimmten Intervalls abgestellt werden. Auch auf diese Weise können Funktionen, die dem Benutzer wichtig sind und die eigentlich nur über die Suche zugreifbar sind, zukünftig auch ohne Suche über Menüeinträge aufgerufen werden. Die Benutzerschnittstelle passt sich somit in einem gewissen Umfang automatisch den Gewohnheiten des Benutzers an.

Gemäß einem Aspekt der Erfindung ist die Benutzerschnittstelle eingerichtet, die Zuordnung eines Menüeintrags aufzuheben, wenn die zugehörige Funktion während einer Zeitdauer nicht genutzt wurde. Auf diese Weise können Menüeinträge für ungenutzte Funktionen aus den Menüs entfernt werden, womit die Übersichtlichkeit der Menüs weiter verbessert wird. Bei den ungenutzten Funktionen kann es sich sowohl um Funktionen handeln, die von vorneherein über Menüeinträge aufrufbar waren, als auch um Funktionen, für die nachträglich Menüeinträge erstellt wurden.

Gemäß einem Aspekt der Erfindung ist die Benutzerschnittstelle eingerichtet, in Reaktion auf eine Suche auf weitere aufrufbare Funktionen hinzuweisen. Wenn der Benutzer bestimmte Funktionen sucht kann beispielsweise auf aufrufbare Funktionen in Umfeld dieser Funktion hingewiesen werden. Auf Wunsch können dann weitere Informationen zu den Funktionen geliefert werden oder derartige Hinweise für die Zukunft unterbunden werden. Durch den Hinweis auf weitere aufrufbare Funktionen wird der Benutzer über ihm unter Umständen unbekannte Funktionen unterrichtet, an deren Nutzung er Interesse habe könnte. Der Benutzer lernt so beiläufig die Möglichkeiten der Benutzerschnittstelle und den verfügbaren Funktionsumfang kennen.

Gemäß einem Aspekt der Erfindung ist die Benutzerschnittstelle eingerichtet, bei erfolgloser Suche ein Hilfskonzept für einen Benutzer bereitzustellen. Beispielsweise kann die Suche dazu bei Misserfolg auf eine Onlinesuche erweitert werden. Als weitere Möglichkeit kann ein Concierge-Rufknopf angezeigt werden, der den Rufaufbau zu einem Servicecenter bewirkt. Alternativ kann über eine Schaltfläche ein Versenden der Nutzerinteraktion an ein Servicecenter initiiert werden. Auf diese Weise kann gewährleistet werden, dass der Benutzer auch bei einer ergebnislosen Suche bzw. bei einer Suche, die nicht die vom Benutzer gewünschte Funktion liefert, weitere Unterstützung beim Auffinden der gewünschten Funktion erhalten kann, beispielsweise durch einen Servicemitarbeiter.

Gemäß einem Aspekt der Erfindung ist die Benutzerschnittstelle eingerichtet, eine Sprache eines Begriffes zu erkennen, der in eine Eingabemaske der Suchfunktion eingegeben wurde, und ein Ergebnis in der erkannten Sprache auszugeben. So kann der Benutzer beispielsweise im Eingabefeld der Suchfunktion zu jeder Zeit in allen für die Benutzerschnittstelle verfügbaren Sprachen das Wort "Hilfe", "Help", "Aide", etc. eingeben, um dann situative Hilfe zu erhalten. Diese Hilfe erfolgt dann automatische in der jeweiligen Sprache. Somit kann ein Benutzer selbst dann mit der Benutzerschnittstelle interagieren, wenn bei der Benutzerschnittstelle eine Sprache eingestellt ist, die der Benutzer nicht beherrscht. Beispielsweise kann der Benutzer bei einem Mietwagen im Ausland auf diesem Weg die Spracheinstellung der Benutzerschnittstelle in seine Muttersprache abändern, ohne dass er die zuvor angezeigten Menüeinträge verstehen muss.

Vorzugsweise werden eine erfindungsgemäße Benutzerschnittstelle oder ein erfindungsgemäßes Verfahren in einem Fahrerinformationssystem für ein Fahrzeug und/oder in einem autonom oder manuell gesteuerten Fahrzeug eingesetzt.

Weitere Merkmale der vorliegenden Erfindung werden aus der nachfolgenden Beschreibung und den angehängten Ansprüchen in Verbindung mit den Figuren ersichtlich.

### Kurze Beschreibung der Figuren

- Fig. 1: zeigt schematisch eine Benutzerschnittstelle für den Zugriff auf eine Menge von Funktionen;
- Fig. 2: zeigt schematisch ein Verfahren zum Bereitstellen einer Benutzerschnittstelle für den Zugriff auf eine Menge von Funktionen;
- Fig. 3: zeigt eine erste Ausführungsform eines Fahrerinformationssystems für ein Fahrzeug;
- Fig. 4: zeigt eine zweite Ausführungsform eines Fahrerinformationssystems für ein Fahrzeug;
- Fig. 5: zeigt ein Fahrzeug mit einem Fahrerinformationssystem;
- Fig. 6: zeigt eine erste bevorzugte Ausführungsform einer Benutzerschnittstelle mit einer Suchfunktion;
- Fig. 7: zeigt die Ausführungsform aus Fig. 6 mit einer eingeblendeten Ergebnisliste;
- Fig. 8: zeigt eine zweite bevorzugte Ausführungsform einer Benutzerschnittstelle mit einer Suchfunktion; und
- Fig. 9: zeigt die Ausführungsform aus Fig. 8 mit einer eingeblendeten Ergebnisliste.

### Detaillierte Beschreibung der Ausführungsformen

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

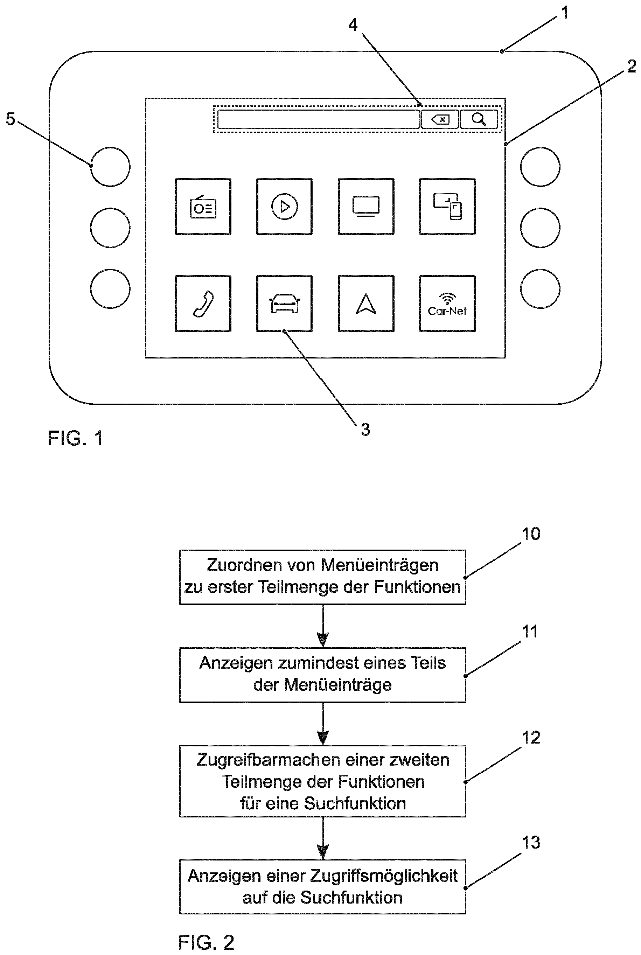

Fig. 1 zeigt schematisch eine Benutzerschnittstelle 1 für den Zugriff auf eine Menge von Funktionen. Im gezeigten Beispiel wird die Benutzerschnittstelle 1 auf einer Anzeigevorrichtung 2 dargestellt. Einer Teilmenge der aufrufbaren Funktionen sind Menüeinträge 3 zugeordnet. Durch Aktivieren eines Menüeintrags 3 kann ein Benutzer der Benutzerschnittstelle 1 die zugeordnete Funktion aufrufen. Einer weiteren Teilmenge der aufrufbaren Funktionen sind hingegen keine Menüeinträge zugeordnet. Zum Aufrufen dieser Funktionen steht innerhalb der Benutzerschnittstelle 1 eine Suchfunktion 4 bereit. Nach dem Aufrufen der Suchfunktion 4 bzw. nach der Eingabe eines Suchbegriffes werden dem Benutzer Suchergebnisse angezeigt, aus denen heraus der Benutzer die gewünschte Funktion aufrufen kann. Die Interaktion zwischen dem Benutzer und der Benutzerschnittstelle 1 kann auf vielfältige Weise erfolgen, beispielsweise als akustische Eingabe, mechanische Eingabe oder berührungslose Eingabe. Eine akustische Eingabe erfolgt vorzugsweise als Spracheingabe über ein Mikrofon. Eine mechanische Eingabe kann mittels einer Tastatur, einem Touchscreen oder Bedienelementen 5 der Benutzerschnittstelle 1 erfolgen, allerdings kann auch ein speziell für die Steuerung ausgelegtes Steuerungselement vorgesehen sein, beispielsweise ein multifunktionaler Drehknopf. Für eine berührungslose Eingabe werden vorzugsweise mit Hilfe einer Kamera Gesten oder Augenbewegungen des Benutzers erfasst. Selbstverständlich sind auch Kombinationen der verschiedenen Eingabemethoden möglich.

Fig. 2 zeigt schematisch ein Verfahren zum Bereitstellen einer Benutzerschnittstelle für den Zugriff auf eine Menge von Funktionen. In einem ersten Schritt werden einer ersten Teilmenge der Funktionen Menüeinträge der Benutzerschnittstelle zugeordnet 10, über die die Funktionen aufrufbar sind. Zumindest ein Teil der Menüeinträge wird auf der Anzeigevorrichtung der Benutzerschnittstelle angezeigt 11. Eine zweite Teilmenge der Funktionen, der keine Menüeinträge der Benutzerschnittstelle zugeordnet sind, wird für eine Suchfunktion der Benutzerschnittstelle zugreifbar gemacht 12. Dementsprechend wird auf der Anzeigevorrichtung der Benutzerschnittstelle eine Zugriffsmöglichkeit auf die Suchfunktion angezeigt 13.

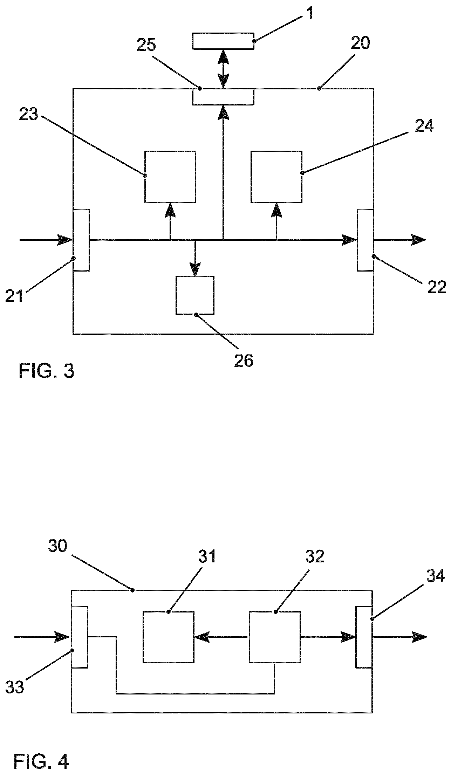

Fig. 3 zeigt eine vereinfachte schematische Darstellung einer ersten Ausführungsform eines Fahrerinformationssystems 20 für ein Fahrzeug. Das Fahrerinformationssystem 20 hat einen Eingang 21 zum Empfangen von Daten aus einem Bordnetz des Fahrzeugs und einen Ausgang 22 zum Ausgeben von Daten an das Bordnetz. Weiterhin hat das Fahrerinformationssystem 20 eine Schnittstelle 25 zur Kommunikation mit einer Benutzerschnittstelle 1. Allerdings kann die Benutzerschnittstelle 1 auch integraler Bestandteil des Fahrerinformationssystems 20 sein. Der Eingang 21, der Ausgang 22 und die Schnittstelle 25 können als getrennte Schnittstellen oder ganz oder teilweise als kombinierte bidirektionale Schnittstelle implementiert sein. Eine Verarbeitungseinheit 23 verarbeitet die über das Bordnetz empfangenen Daten und generiert die erforderlichen Anweisungen für einen Grafikprozessor 24, um Menüeinträge und eine Suchfunktion auf einer Anzeigevorrichtung der Benutzerschnittstelle 1 darzustellen. Zudem verarbeitet die Verarbeitungseinheit 23 die von der Benutzerschnittstelle 1 empfangenen Daten und leitet gegebenenfalls über das Bordnetz die erforderlichen Instruktionen an die jeweiligen Komponenten oder Steuergeräte des Fahrzeugs weiter. Die im Fahrerinformationssystem 20 anfallenden Daten können zudem in einem Speicher 26 des Systems 20 abgelegt werden, beispielsweise für eine spätere Auswertung. Die Verarbeitungseinheit 23 und der Grafikprozessor 24 können als dezidierte Hardware realisiert sein, beispielsweise als integrierte Schaltungen. Natürlich können sie aber auch teilweise oder vollständig kombiniert oder als Software implementiert werden, die auf einem geeigneten Prozessor läuft.

Fig. 4 zeigt eine vereinfachte schematische Darstellung einer zweiten Ausführungsform eines Fahrerinformationssystems 30 für ein Fahrzeug. Das Fahrerinformationssystem 30 weist einen Prozessor 32 und einen Speicher 31 auf. Beispielsweise handelt es sich bei dem Fahrerinformationssystem 30 um einen Computer. Im Speicher 31 sind Instruktionen abgelegt, die das Fahrerinformationssystem 30 bei Ausführung durch den Prozessor 32 veranlassen, eine der beschriebenen Benutzerschnittstellen bereitzustellen bzw. die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren bzw. die erfindungsgemäße Benutzerschnittstelle realisiert. Das Fahrerinformationssystem 30 hat einen Eingang 33 zum Empfangen von Daten. Vom Prozessor 32 generierte Daten werden über einen Ausgang 34 bereitgestellt, beispielsweise zur Anzeige auf einer Anzeigevorrichtung. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können volatile und/oder nichtvolatile Speicherbereiche aufweisen und unterschiedlichste Speichergeräte und Speichermedien umfassen, beispielsweise Festplatten, optische Speichermedien oder Halbleiterspeicher.

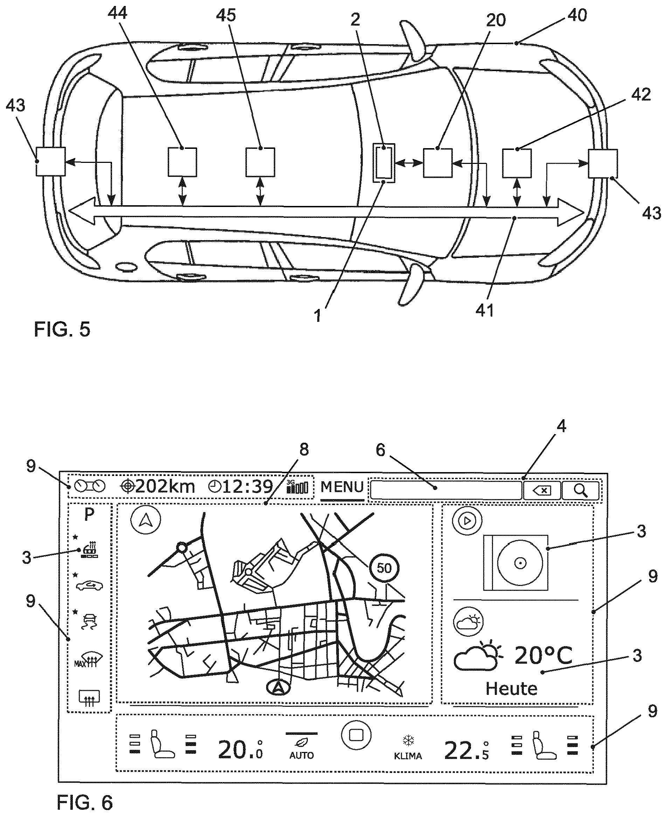

Fig. 5 zeigt schematisch ein Fahrzeug 40 mit einem Fahrerinformationssystem 20. Das Fahrerinformationssystem 20 ist mit einer Benutzerschnittstelle 1 mit einer Anzeigevorrichtung 2 verbunden. Die Benutzerschnittstelle 1 kann dabei auch integraler Bestandteil des Fahrerinformationssystems 20 sein. Das Fahrerinformationssystem 20 ist in ein Bordnetz 41 des Fahrzeugs 40 eingebunden. Über das Bordnetz 41 bestehen Zugriffsmöglichkeiten auf eine Reihe von Fahrzeugkomponenten, beispielsweise Steuergeräte 42, Sensoren 43, Kommunikationsschnittstellen 44 oder Datenspeicher 45.

Daten der Steuergeräte 42 und Sensoren 43 können bei Bedarf vom Fahrerinformationssystem 20 angezeigt oder ausgewertet werden, zumindest teilweise können über das Fahrerinformationssystem 20 zudem Einstellungen der Steuergeräte 42 geändert werden, beispielsweise zur Anpassung einer Fahrzeugklimatisierung oder des Fahrwerks. Die Kommunikationsschnittstellen 44 können unidirektionale Schnittstellen sein, beispielsweise für den Radioempfang oder den Empfang von Positionsdaten für die Fahrzeugnavigation. Ebenso können bidirektionale Schnittstellen vorgesehen sein, z.B. für den Zugriff auf Internetdienste, die Telekommunikation oder den Datenaustausch mit einem mobilen Gerät eines Fahrzeuginsassen, z.B. einem Smartphone oder Tablet. Beispiele für Datenspeicher 45 sind ein USB-Speicher, eine in das Fahrzeug 40 integrierte Festplatte oder ein Festkörperspeicher. Auf den Datenspeichern 45 können beispielsweise Multimediainhalte wie Musik- oder Videodateien sowie Kartendaten für die Navigation abgelegt sein.

### Beschreibung einer bevorzugten Ausführungsform

Nachfolgend soll eine bevorzugte Ausführungsform der Erfindung anhand der Figuren 6 bis 9 im Detail beschrieben werden.

Fig. 6 zeigt eine erste bevorzugte Ausführungsform einer Benutzerschnittstelle 1 mit einer Suchfunktion 4. In dieser Ausführungsform ist eine permanente Eingabemaske 6 in der Benutzerschnittstelle 1 vorgesehen, unabhängig davon, welches Menü oder Untermenü aktuell angezeigt wird bzw. welche Funktion ausgeführt wird. Im Beispiel in Fig. 6 wird unter anderem eine Navigationsfunktion ausgeführt. Daher umfasst die Benutzerschnittstelle 1 einen Navigationsbereich 8, in dem die aktuelle Position des Fahrzeugs, eine Route sowie umgebungsbezogene Informationen angezeigt werden, in diesem Fall eine Geschwindigkeitsbegrenzung. Weiterhin gibt es eine Reihe von Informationsbereichen 9, in denen unterschiedlichste Informationen vermittelt werden, beispielsweise Wetterdaten, Informationen zur Musikwiedergabe, zur Zielentfernung und Zielankunftszeit, zur Fahrzeugklimatisierung und zu weiteren Fahrzeugeinstellungen. Zum Teil stellen die Informationen gleichzeitig Menüeinträge 3 dar, über deren Aktivierung man zur zugehörigen Funktion gelangt. Durch Berühren der Wetterdaten gelangt man beispielsweise in das Wettermenü mit der Wettervorhersage, durch das Berühren der Informationen zur Musikwiedergabe in das Multimediamenü, in dem z.B. andere Musiktitel ausgewählt werden können, etc. Über andere Menüeinträge 3 können direkt die Fahrzeugeinstellungen geändert werden, beispielsweise können die Lenkradheizung, das Frontscheibengebläse oder die Heckscheibenheizung ein- oder ausgeschaltet werden. Die Darstellung der Menüeinträge kann dabei abhängig von der jeweiligen Fahrzeugeinstellung verändert werden, so dass unmittelbar ersichtlich ist, ob eine Funktion ein- oder ausgeschaltet ist oder auf welcher Stufe sie sich befindet, beispielsweise im Falle der Sitzheizung oder des Frontscheibengebläses.

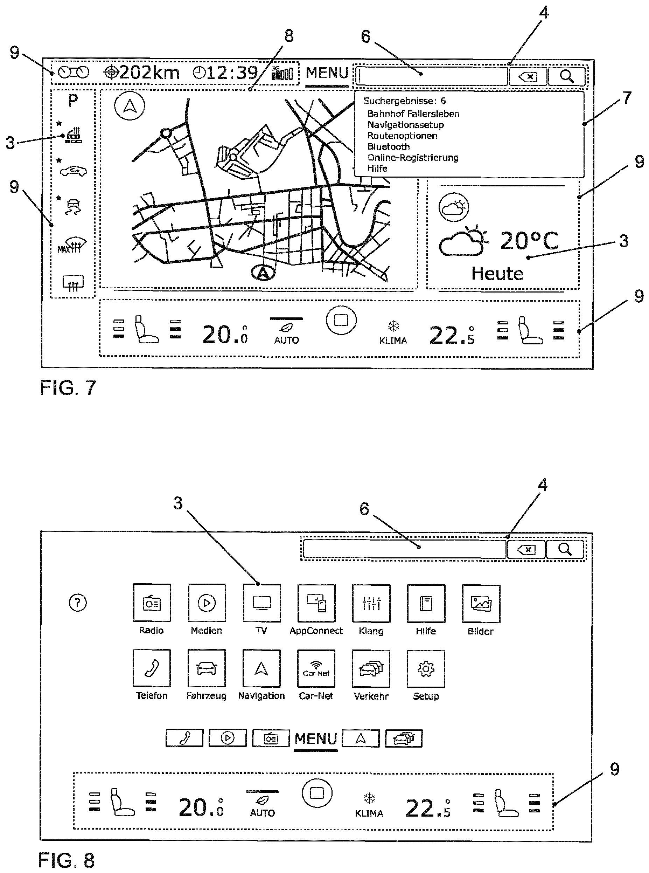

Fig. 7 zeigt die Ausführungsform aus Fig. 6 mit einer eingeblendeten Ergebnisliste 7. Unmittelbar nach Aktivieren der Eingabemaske 6, noch bevor ein Suchbegriff eingegeben wurde, erscheint eine vorläufige Ergebnisliste 7. Diese umfasst beispielsweise letzte Ergebnisse, d.h. Ergebnisse vorheriger Suchen, kontextbezogene Einträge, Einträge zu häufig angefragten Themen und/oder einen Hilfe-Assistenten. In Fig. 7 enthält die vorläufige Ergebnisliste 7 Beispiele für alle dieser Möglichkeiten. Als erster Eintrag ist ein vorheriges Suchergebnis aufgelistet, in diesem Fall eine zuvor gesuchte Adresse. Die Einträge "Navigationssetup" und "Routenoptionen" stellen kontextbezogene Einträge dar. Sie erscheinen, weil aktuell eine Navigationsfunktion ausgeführt wird. Die Einträge "Bluetooth" und "Online-Registrierung" betreffen häufig angefragte Themen, sie sind unabhängig vom aktuellen Kontext. Schließlich ist auch noch ein Eintrag "Hilfe" verfügbar. Der Benutzer hat nun die Möglichkeit, einen der Einträge der vorläufige Ergebnisliste 7 auszuwählen, sofern dieser der gewünschten Funktion entspricht. Andernfalls kann ein Suchbegriff eingegeben und eine entsprechende Suche durchgeführt werden. Das Ergebnis der Suche kann dabei neben Funktionen, die ausschließlich über eine Suche aufrufbar sind, auch Funktionen umfassen, denen Menüeinträge zugeordnet sind.

Fig. 8 zeigt eine zweite bevorzugte Ausführungsform einer Benutzerschnittstelle 1 mit einer Suchfunktion 4. In dieser Ausführungsform steht die Suchfunktion 4 nicht permanent zur Verfügung sondern lediglich in einem oder einigen wenigen Menüs oder Untermenüs. Im Beispiel in Fig. 8 wird ein Übersichtsmenü angezeigt, das über entsprechende Menüeinträge 3 Zugriff auf Menüs zu den verschiedensten Themenbereichen erlaubt. Zusätzlich zu den Menüeinträgen und der Suchfunktion 4 nebst Eingabemaske 6 ist auch in diesem Beispiel ein Informationsbereich 9 vorhanden.

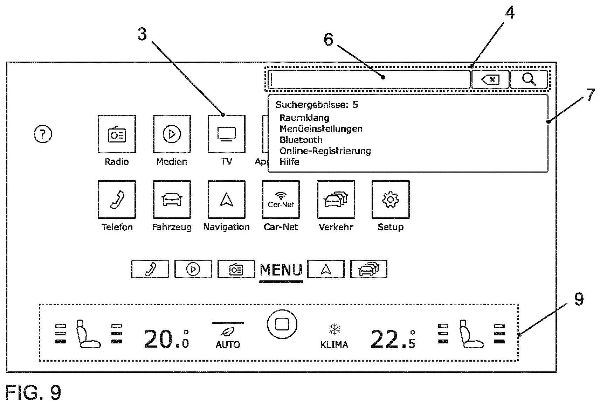

Fig. 9 zeigt die Ausführungsform aus Fig. 8 mit einer eingeblendeten Ergebnisliste 7. Unmittelbar nach Aktivieren der Eingabemaske 6, noch bevor ein Suchbegriff eingegeben wurde, erscheint auch hier eine vorläufige Ergebnisliste 7. Diese umfasst wiederum letzte Ergebnisse, kontextbezogene Einträge, Einträge zu häufig angefragten Themen und/oder einen Hilfe-Assistenten. In Fig. 9 enthält die vorläufige Ergebnisliste erneut 7 Beispiele für alle dieser Möglichkeiten. Als erster Eintrag ist mit "Raumklang" ein vorheriges Suchergebnis aufgelistet, in diesem Fall eine zuvor gesuchte Klangeinstellung. Der Eintrag "Menüeinstellungen" stellt einen kontextbezogenen Eintrag dar, da er eine Anpassung des aktuell dargestellten Menüs erlaubt. Die Einträge "Bluetooth" und "Online-Registrierung" betreffen wie schon im vorherigen Beispiel häufig angefragte Themen, sie sind unabhängig vom aktuellen Kontext. Schließlich ist auch noch hier ein Eintrag "Hilfe" verfügbar. Der Benutzer hat nun die Möglichkeit, einen der Einträge der vorläufige Ergebnisliste 7 auszuwählen, sofern dieser der gewünschten Funktion entspricht. Andernfalls kann ein Suchbegriff eingegeben und eine entsprechende Suche durchgeführt werden.

Welche Funktionen ausschließlich über eine Suche zugänglich sind wird in erster Linie vom Gestalter der Benutzerschnittstelle 1 festgelegt. Eine Möglichkeit besteht beispielsweise darin, dass das Menü "Hilfe" nur bzw. primär ein Suchfeld beinhaltet. Ebenso ist es möglich, dass lediglich das elektronische Handbuch bzw. die Bedienungsanleitung, eventuell zugängliche Onlinefunktionen oder sämtliche Setup-Funktionen nur mittels Suche erreichbar sind. In diversen Geräten gibt es ein eigenständiges, übergeordnetes Menü "Setup" und zudem ein weiteres Menü "Setup" je Kontext. Das Menü "Setup" für den Kontext "Telefon" enthält dann nur Einstellmöglichkeiten für die Telefonnutzung, das Menü "Setup" für den Kontext "Navigation" nur Einstellmöglichkeiten für die Navigationsfunktion, etc. Je nach Implementierung ersetzt die Suche nur das übergeordnete Menü "Setup", nur die Menüs "Setup" für die Kontexte oder alle Menüs "Setup". Ebenso können die Menüs "Setup" in reduzierter, vereinfachter Form beibehalten werden. In diesem Fall ersetzt die Suchfunktion nur die restlichen, entfallenen Funktionen. Vorzugsweise ist dabei die Möglichkeit vorgesehen, dass der Benutzer ein Suchergebnis als Favorit zugreifbar machen kann. Suchergebnisse, insbesondere erfolgreiche Suchergebnisse, können dazu sofort als Favorit abgelegt bzw. einer Favoritentaste zugeordnet werden. Auf diese Weise erstellte Favoriten können beispielsweise in jeder Bildschirmanzeige erscheinen die Ergebnislisten enthält.

Alternativ oder zusätzlich zur Möglichkeit, Ergebnisse als Favorit abzulegen, kann die Benutzerschnittstelle 1 auch eigenständig einer über die Suchfunktion 4 gesuchten Funktion einen Menüeintrag zuordnen. Wenn der Benutzer die gesuchte Funktion beispielsweise öfter aufruft, kann er einen Direktzugriff in einem bestimmten Menü oder einer bestimmten Bildschirmanzeige erhalten, z.B. in einem Menü "Favoriten". Dabei kann auf die absolute Zahl der Aufrufe oder die Zahl der Aufrufe innerhalb eines bestimmten Intervalls abgestellt werden. Optional können dieser Direktzugriff sowie weitere Menüeinträge bei Nichtbenutzung nach einer gewissen Zeit wieder verschwinden. Weiterhin kann, wenn der Benutzer bestimmte Funktionen sucht, auf aufrufbare Funktionen in diesem Umfeld hingewiesen werden. Beispielsweise kann ein Benutzer, wenn er eine Funktion "xy" sucht, darüber informiert werden, dass er auch die Funktionen "u, v und w" über die Suche aufrufen kann. Auf Wunsch können dann weitere Informationen zu den Funktionen geliefert werden oder derartige Hinweise für die Zukunft unterbunden werden.

In einer bevorzugten Ausführungsform wird die Sprache eines Begriffes erkannt, der in die Eingabemaske 6 der Suchfunktion 4 eingegeben wurde. Das Ergebnis wird dann in der erkannten Sprache ausgegeben. So kann beispielsweise in jedem Speller, der in der Benutzerschnittstelle 1 für die Alphanumerikeingabe vorhanden ist, zu jeder Zeit in allen für die Benutzerschnittstelle 1 verfügbaren Sprachen das Wort "Hilfe", "Help", "Aide", etc. eingegeben werden, um dann situative Hilfe zu erhalten. Diese Hilfe erfolgt dann automatische in der jeweiligen Sprache.

In einer bevorzugten Ausführungsform wird für den Benutzer ein Hilfskonzept bereitgestellt, das bei erfolgloser Suche zum Tragen kommt. Als eine erste Möglichkeit kann die Suche dazu bei Misserfolg auf eine Onlinesuche erweitert werden. Als weitere Möglichkeit kann zusätzlich zur Eingabemaske 6 ein Concierge-Rufknopf angezeigt werden, der den Rufaufbau zu einem Servicecenter bewirkt. Alternativ kann über eine Schaltfläche ein Versenden der Nutzerinteraktion an ein Servicecenter initiiert werden.

### Bezugszeichenliste

- 1: Benutzerschnittstelle
- 2: Anzeigevorrichtung
- 3: Menüeinträge
- 4: Suchfunktion
- 5: Bedienelement
- 6: Eingabemaske
- 7: Ergebnisliste
- 8: Navigationsbereich
- 9: Informationsbereich
- 10: Zuordnen von Menüeinträgen zu erster Teilmenge der Funktionen
- 11: Anzeigen zumindest eines Teils der Menüeinträge
- 12: Zugreifbarmachen einer zweiten Teilmenge der Funktionen für eine Suchfunktion
- 13: Anzeigen einer Zugriffsmöglichkeit auf die Suchfunktion
- 20: Fahrerinformationssystem
- 21: Eingang
- 22: Ausgang
- 23: Verarbeitungseinheit
- 24: Grafikprozessor
- 25: Schnittstelle
- 26: Speicher
- 30: Fahrerinformationssystem
- 31: Speicher
- 32: Prozessor
- 33: Eingang
- 34: Ausgang
- 40: Fahrzeug
- 41: Bordnetz
- 42: Steuergerät
- 43: Sensor
- 44: Kommunikationsschnittstelle
- 45: Datenspeicher

## Patentansprüche

1. Benutzerschnittstelle (1) für den Zugriff auf eine Menge von Funktionen, wobei einer ersten Teilmenge der Funktionen Menüeinträge (3) der Benutzerschnittstelle (1) zugeordnet sind, über die die Funktionen aufrufbar sind, **dadurch gekennzeichnet, dass** einer zweiten Teilmenge der Funktionen keine Menüeinträge (3) der Benutzerschnittstelle (1) zugeordnet sind und die Funktionen stattdessen über eine Suchfunktion (4) der Benutzerschnittstelle (1) aufrufbar sind.

2. Benutzerschnittstelle (1) gemäß Anspruch 1, wobei die Benutzerschnittstelle (1) eingerichtet ist, bei Aktivierung einer Eingabemaske (6) der Suchfunktion (4) eine vorläufige Ergebnisliste (7) anzuzeigen.

3. Benutzerschnittstelle (1) gemäß Anspruch 2, wobei die vorläufige Ergebnisliste (7) Ergebnisse einer vorherigen Suche, kontextbezogene Einträge, Einträge zu häufig angefragten Themen und/oder einen Hilfe-Assistenten umfasst.

4. Benutzerschnittstelle (1) gemäß einem der vorherigen Ansprüche, wobei die Benutzerschnittstelle (1) einem Benutzer die Möglichkeit bietet, ein Suchergebnis als Favorit zugreifbar zu machen.

5. Benutzerschnittstelle (1) gemäß einem der vorherigen Ansprüche, wobei die Benutzerschnittstelle (1) eingerichtet ist, einer über die Suchfunktion (4) gesuchten Funktion einen Menüeintrag zuzuordnen.

6. Benutzerschnittstelle (1) gemäß einem der vorherigen Ansprüche, wobei die Benutzerschnittstelle (1) eingerichtet ist, die Zuordnung eines Menüeintrags (3) aufzuheben, wenn die zugehörige Funktion während einer Zeitdauer nicht genutzt wurde.

7. Benutzerschnittstelle (1) gemäß einem der vorherigen Ansprüche, wobei die Benutzerschnittstelle (1) eingerichtet ist, in Reaktion auf eine Suche auf weitere aufrufbare Funktionen hinzuweisen.

8. Benutzerschnittstelle (1) gemäß einem der vorherigen Ansprüche, wobei die Benutzerschnittstelle (1) eingerichtet ist, bei erfolgloser Suche ein Hilfskonzept für einen Benutzer bereitzustellen.

9. Benutzerschnittstelle (1) gemäß einem der vorherigen Ansprüche, wobei die Benutzerschnittstelle (1) eingerichtet ist, eine Sprache eines Begriffes zu erkennen, der in eine Eingabemaske (6) der Suchfunktion (4) eingegeben wurde, und ein Ergebnis in der erkannten Sprache auszugeben.

10. Verfahren zum Bereitstellen einer Benutzerschnittstelle (1) für den Zugriff auf eine Menge von Funktionen, mit den Schritten:
- Zuordnen (10) von Menüeinträgen (3) der Benutzerschnittstelle (1) zu einer ersten Teilmenge der Funktionen, wobei die Funktionen über die zugeordneten Menüeinträge (3) aufrufbar sind; und
- Anzeigen (11) zumindest eines Teils der Menüeinträge (3) auf einer Anzeigevorrichtung (2);
**gekennzeichnet durch**
- Zugreifbarmachen (12) einer zweiten Teilmenge der Funktionen, der keine Menüeinträge (3) der Benutzerschnittstelle (1) zugeordnet sind, für eine Suchfunktion (4) der Benutzerschnittstelle (1); und
- Anzeigen (13) einer Zugriffsmöglichkeit auf die Suchfunktion (4) auf der Anzeigevorrichtung (2).

11. Computerlesbares Speichermedium mit Instruktionen, die bei Ausführung durch einen Computer den Computer zur Ausführung der folgenden Schritte zum Bereitstellen einer Benutzerschnittstelle (1) für den Zugriff auf eine Menge von Funktionen veranlassen:
- Zuordnen (10) von Menüeinträgen (3) der Benutzerschnittstelle (1) zu einer ersten Teilmenge der Funktionen, wobei die Funktionen über die zugeordneten Menüeinträge (3) aufrufbar sind; und
- Anzeigen (11) zumindest eines Teils der Menüeinträge (3) auf einer Anzeigevorrichtung (2);
**gekennzeichnet durch**
- Zugreifbarmachen (12) einer zweiten Teilmenge der Funktionen, der keine Menüeinträge (3) der Benutzerschnittstelle (1) zugeordnet sind, für eine Suchfunktion (4) der Benutzerschnittstelle (1); und
- Anzeigen (13) einer Zugriffsmöglichkeit auf die Suchfunktion (4) auf der Anzeigevorrichtung (2).

12. Fahrerinformationssystem (20, 30) für ein Fahrzeug (40),**dadurch gekennzeichnet, dass** das Fahrerinformationssystem (20, 30) eine Benutzerschnittstelle (1) gemäß einem der Ansprüche 1 bis 9 aufweist oder eingerichtet ist, ein Verfahren gemäß Anspruch 10 zum Bereitstellen einer Benutzerschnittstelle (1) für den Zugriff auf eine Menge von Funktionen auszuführen.

13. Autonom oder manuell gesteuertes Fahrzeug (40), **dadurch gekennzeichnet, dass** es eine Benutzerschnittstelle (1) gemäß einem der Ansprüche 1 bis 9 oder ein Fahrerinformationssystem (20, 30) gemäß Anspruch 12 aufweist oder eingerichtet ist, ein Verfahren gemäß Anspruch 10 zum Bereitstellen einer Benutzerschnittstelle (1) für den Zugriff auf eine Menge von Funktionen auszuführen.
